# EUROPEAN PATENT APPLICATION

(11) **EP 4 823 178 A1**
(43) Date of publication of application: **14.10.2026**
(21) Application number: 25736425.7
(22) Date of filing: 03.01.2025
(51) Int. Cl.: H04W 36/00

(54) **MEASUREMENT METHOD AND APPARATUS, AND TERMINAL, NETWORK DEVICE AND STORAGE MEDIUM**

(30) Priority: 04.01.2024 CN 202410014694
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100053 (CN)
(74) Representative: Murgitroyd & Company
(86) International application number: PCT/CN2025/070619
(87) International publication number: WO 2025/146186

(57) **Abstract**

The present disclosure discloses a measurement method, apparatus, UE, network device, and storage medium. The method includes: performing, by the UE, L1 measurement; and/or transmitting first information and/or second information to a network. The first information is related to a receive timing difference; and the second information is related to report and/or measurement.

## Description

### CROSS-REFERENCE TO RELATED APPLICATION

The present application is filed based on and claims the priority of Chinese Application No. 202410014694.8, filed on January 4, 2024, the disclosure of which are incorporated in their entireties by reference herein.

### TECHNICAL FIELD

The present disclosure relates to the field of communication technologies, and in particular, to a measurement method, apparatus, UE, network device, and storage medium.

### BACKGROUND

In the related art, an inter-cell mobility mechanism based on Layer 1 (L1) is utilized to reduce delay and signaling overhead caused by cell handover. However, there exists a mismatch problem between mobility multi-frequency/cell measurement requirements and L1 measurement capability of a UE.

### SUMMARY

In order to solve related technical problems, embodiments of the present disclosure provide a measurement method, apparatus, UE, network device, and storage medium.

One embodiment of the present disclosure provides a measurement method, executed by a UE, wherein the method includes at least one of the following:
performing Layer 1 (L1) measurement;
transmitting first information to a network, wherein the first information is related to a receive timing difference; or
transmitting second information to the network, wherein the second information is related to report and/or measurement.

In some embodiments, the performing L1 measurement includes at least one of the following:
performing L3 measurement;
performing L3 reporting; or
reporting L3 measurement result.

In some embodiments, the performing L1 measurement includes at least one of the following:
performing L1 measurement for cells or frequency layers whose L3 measurement results are larger than or equal to a first threshold; or
performing L1 measurement for cells or frequency layers whose L3 signal quality of a neighbor cell is at least higher than a signal quality of a serving cell by a second threshold.

In some embodiments, the method further includes:
receiving third information transmitted by the network, wherein the third information includes at least one of a cell identity, a frequency, or a Synchronization Signal Block (SSB), for performing L1 measurement.

In some embodiments, the first information is used to indicate at least one of the following:
the UE supports that a receive timing difference is larger than CP length;
the UE does not support that a receive timing difference is larger than CP length;
the UE supports that a receive timing difference is less than or equal to CP length;
the UE supports simultaneous measurement of non-synchronized cells;
the UE does not support simultaneous measurement of non-synchronized cells;
the UE supports simultaneous L1 measurement for cells when the receive timing difference among the cells is larger than CP length; or
the UE does not support simultaneous L1 measurement for cells when the receive timing difference among the cells is larger than CP length.

In some embodiments, the first information is used to indicate at least one of the following:
simultaneous L1 measurement for N cells when the receive timing difference is larger than CP length, where N is an integer larger than 1; or
simultaneous L1 measurement on a same symbol for N cells when the receive timing difference is larger than CP length, where N is an integer larger than 1.

In some embodiments, the second information indicates at least one of the following:
a maximum number of cells for measurement;
a maximum number of frequency layers for measurement;
a maximum number of cells in report;
a maximum number of beams in report;
a maximum value of a product of the number of cells in report and the number of beams in report;
the number of cells for measurement;
the number of frequency layers for measurement;
the number of cells in report; or
the number of beams in report.

In some embodiments, the second information includes at least one of the following:
RSRP;
SSB index;
CSI-RS index; or
cell identity.

In some embodiments, the method further includes:
receiving fourth information transmitted by the network, wherein the fourth information indicates at least one of the following:
a correspondence between SSB index and cell identity; or
a correspondence between CSI-RS index and cell identity.

In some embodiments, the method further includes at least one of the following:
not receiving PDCCH and/or PDSCH and/or CSI-RS for tracking and/or CSI-RS for CQI, on SSBs configured for L1-RSRP measurement;
not transmitting PUSCH and/or PUCCH and/or SRS, on SSBs configured for L1-RSRP measurement;
not receiving PDCCH and/or PDSCH and/or CSI-RS for tracking and/or CSI-RS for CQI, on one symbol before the SSB configured for L1-RSRP measurement;
not transmitting PUSCH and/or PUCCH and/or SRS, on one symbol before the SSB configured for L1-RSRP measurement;
not receiving PDCCH and/or PDSCH and/or CSI-RS for tracking and/or CSI-RS for CQI, on one symbol after the SSB configured for L1-RSRP measurement; or
not transmitting PUSCH and/or PUCCH and/or SRS, on one symbol after the SSB configured for L1-RSRP measurement.

In some embodiments, the method further includes:
transmitting fifth information to the network, wherein the fifth information is used to indicate at least one of the following:
support for using L3 measurement results in L1 reporting; or
not support for using L3 measurement results in L1 reporting.

In some embodiments, the method further includes:
receiving sixth information transmitted by the network, wherein the sixth information is used to indicate that a measurement target is used for L1 measurement.

In some embodiments, the method further includes:
prioritizing measurement of the measurement target for L1 measurement.

One embodiment of the present disclosure provides a measurement method, performed by a network device, including:
receiving first information and/or second information transmitted by a UE; wherein the first information is related to a receive timing difference; and the second information is related to report and/or measurement.

In some embodiments, the method further includes:
transmitting third information to the UE, wherein the third information includes at least one of a cell identity, a frequency, or an SSB, for performing L1 measurement.

In some embodiments, the method further includes:
transmitting fourth information to the UE, wherein the fourth information indicates at least one of the following:
a correspondence between SSB index and cell identity; or
a correspondence between CSI-RS index and cell identity.

In some embodiments, the method further includes:
receiving fifth information transmitted by the UE, wherein the fifth information is used to indicate at least one of the following:
support for using L3 measurement results in L1 reporting; or
not support for using L3 measurement results in L1 reporting.

In some embodiments, the method further includes:
transmitting sixth information to the UE, wherein the sixth information is used to indicate that a measurement target is used for L1 measurement.

One embodiment of the present disclosure provides a measurement apparatus, applied to a UE, including:
a measurement unit used to perform L1 measurement; and/or
a first transmission unit used to transmit first information and/or second information to a network, wherein the first information is related to a receive timing difference, and the second information is related to report and/or measurement.

One embodiment of the present disclosure provides a measurement apparatus, applied to a network device, including:
a first receiving unit used to receive first information and/or second information transmitted by a UE, wherein the first information is related to a receive timing difference, and the second information is related to report and/or measurement.

One embodiment of the present disclosure provides a UE, including: a first processor and a first communication interface;
wherein the first processor is used to perform L1 measurement;
the first communication interface is used to transmit first information and/or second information to a network, wherein the first information is related to a receive timing difference, and the second information is related to report and/or measurement.

One embodiment of the present disclosure provides a network device, including: a second processor and a second communication interface;
wherein the second communication interface is used to receive first information and/or second information transmitted by a UE, wherein the first information is related to a receive timing difference, and the second information is related to report and/or measurement.

One embodiment of the present disclosure provides a UE, including: a first processor and a first memory for storing a computer program executable on the first processor; wherein the first processor is used to, when executing the computer program, perform the steps of any one of the above methods on the UE side.

One embodiment of the present disclosure provides a network device, including: a second processor and a second memory for storing a computer program executable on the second processor;
wherein the second processor is used to, when executing the computer program, perform the steps of any one of the above methods on the network device side.

One embodiment of the present disclosure provides a storage medium, including: a computer program stored thereon, wherein the computer program, when executed by a processor, perform the steps of any one of the above methods on the UE side, or perform the steps of any one of the above methods on the network device side.

One embodiment of the present disclosure provides a computer program product, including: a computer program; wherein the computer program, when executed by a processor, perform the steps of any one of the above methods on the UE side, or perform the steps of any one of the above methods on the network device side.

According to the measurement method, apparatus, UE, network device, and storage medium in the embodiments of the present disclosure, a UE performs L1 measurement, and/or transmits first information and/or second information to a network side, where the first information is related to a receive timing difference, and the second information is related to report and/or measurement; and the network side receives the first information and/or the second information transmitted by the UE. In the above solution, the UE transmits the first information and/or the second information to the network side, so that the network side can filter cells/frequency layers subsequently used for L1 measurement, based on the first information and/or the second information, thereby making the L1 measurement more focused. This enables the UE to use its limited L1 measurement capability for measuring potential target cells, thereby improving the degree of matching between the mobility multi-frequency/cell measurement requirement and the L1 measurement capability of UE.

### BRIEF DESCRIPTION OF THE DRAWINGS

FIG. 1 is a schematic flowchart of a measurement method according to an embodiment of the present disclosure;
FIG. 2 is a schematic flowchart of a measurement method according to an embodiment of the present disclosure;
FIG. 3 is a schematic diagram of a measurement apparatus according to an embodiment of the present disclosure;
FIG. 4 is a schematic diagram of a measurement apparatus according to an embodiment of the present disclosure;
FIG. 5 is a schematic diagram of a UE according to an embodiment of the present disclosure; and
FIG. 6 is a schematic diagram of a network device according to an embodiment of the present disclosure.

### DETAILED DESCRIPTION

In the related art, mobility management typically includes: a base station performing a handover to a target cell based on Layer 3 (L3) measurement results reported by a UE; and then, in the target cell, based on a beam management reporting result, configuring a Transmission Configuration Indicator (TCI) state through a Radio Resource Control (RRC) reconfiguration message, thereby enabling the UE to select an appropriate downlink beam for data reception. The above beam management, such as L1-Reference Signal Received Power (RSRP) and L1-Signal to Noise and Interference (SINR), is performed only in a serving cell, and the UE does not need to perform beam management related measurements for neighbor cells.

In order to reduce delay and signaling overhead caused by cell handover, one research direction is to develop L1-based inter-cell mobility. The L1-based inter-cell mobility can be understood as that higher layer does not perceive cell handover based on lower layers or beam handover towards a neighbor cell. The L1-based inter-cell mobility requires the UE to perform L1 measurement and reporting for neighbor cells (non-serving cells)/neighbor frequency layers. Based on different UE implementations, one mainstream implementation approach is to integrate an L1 measurement module into a demodulation module. However, due to factors such as cost and complexity, this approach usually only supports well-synchronized scenarios, or the number of neighbor cells that can support L1 measurement is very limited. However, mobility scenarios require the UE to be able to perform L1 measurement on multiple frequency layers/cells. That is, there is a contradiction between the mobility multi-frequency/cell measurement requirement and the L1 measurement capability of the UE, which results in a mismatch problem between the mobility multi-frequency/cell measurement requirement and the L1 measurement capability of the UE.

In view of this, in various embodiments of the present disclosure, a UE performs L1 measurement, and/or transmits first information and/or second information to a network side, where the first information is related to a receive timing difference, and the second information is related to report and/or measurement; and the network side receives the first information and/or the second information transmitted by the UE. In the above solution, the UE transmits the first information and/or the second information to the network side, so that the network side can filter cells/frequency layers subsequently used for L1 measurement, based on the first information and/or the second information, thereby making the L1 measurement more focused. This enables the UE to use its limited L1 measurement capability for measuring potential target cells, thereby improving the degree of matching between the mobility multi-frequency/cell measurement requirement and the L1 measurement capability of UE.

The present disclosure will be further described in detail hereinafter with reference to the accompanying drawings and embodiments.

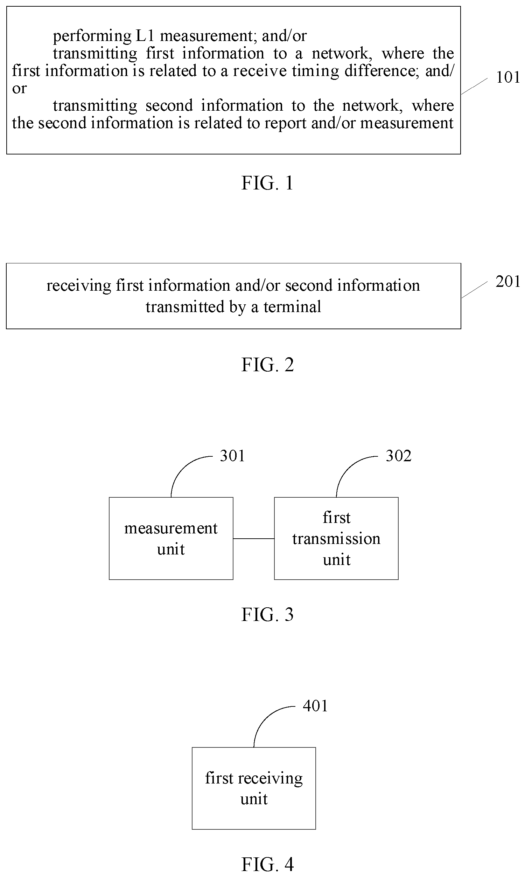

One embodiment of the present disclosure provides a measurement method, applied to a UE. The UE is also referred to as user equipment (UE). As shown in FIG. 1, the method includes:
Step 101: performing L1 measurement; and/or
transmitting first information to a network, where the first information is related to a receive timing difference; and/or
transmitting second information to the network, where the second information is related to report and/or measurement.

Here, the L1 measurement includes at least one of L1-RSRP or L1-Signal to Noise and Interference Ratio (SINR). That is, the L1 measurement includes L1-RSRP measurement and/or L1-SINR measurement.

The L1 measurement includes at least one of intra-frequency L1 measurement or inter-frequency L1 measurement. The L1 measurement is related to L1/L2 triggered mobility (LTM). The L1/L2 triggered mobility can be described as Layer 1 measurement for L1/L2 triggered mobility, and L1/L2 can also be described as L1-L2.

The network can be described as a network side device or a network device. The network side device or network device includes a base station.

The receive timing difference is a timing difference for UE to receive signal from two cells, or described as a difference in receive timing of two cells, or described as a timing difference of the UE's reception from different cells. The receive timing difference can also be extended to a timing difference for more than two cells. The receive timing difference can also be described as the receive timing difference among cells. The receive timing difference at least includes a receive timing difference (usually used for an intra-frequency scenario) between a neighbor cell (or described as a target cell) and a serving cell, and a receive timing difference between two cells on the same frequency (or described as a receive timing difference between a target cell and a reference cell, usually used for an inter-frequency scenario, or described as a receive timing difference among cells on the same frequency layer). That is, the receive timing difference at least includes a receive timing difference between a neighbor cell and a serving cell, and/or a timing difference between two cells on the same frequency. In an intra-frequency scenario or intra-frequency measurement scenario, the receive timing difference may include a receive timing difference between a neighbor cell and a serving cell, and/or a timing difference between a neighbor cell and a serving cell on the same frequency. The receive timing difference between a neighbor cell and a serving cell can be described as a receive timing difference between a target cell and a serving cell. In an inter-frequency scenario or inter-frequency measurement scenario, the receive timing difference includes a timing difference between two cells on the same frequency. The timing difference between two cells on the same frequency can also be described as a receive timing difference between a target cell and a reference cell. Two cells can also be described as more than one cell.

The reporting can be described as measurement reporting, or reporting of measurement results, and at least include reporting of L1 measurement results. The reporting at least includes reporting of L1 measurement results. A cell can be identified by a Physical Cell Identifier (PCI); a frequency can be identified by an Absolute Radio Frequency Channel Number (ARFCN); and an SSB can be identified by an SSB index.

Considering that L1 measurement of neighbor cells for some UEs is limited by factors such as cost and complexity, it usually only supports well-synchronized scenarios, or the number of neighbor cells supporting L1 measurement is very limited. Based on this, in order to facilitate the network to screen cells or frequency layers for L1 measurement, so that the UE can use its limited L1 measurement capability for measuring potential target cells, in one embodiment, the first information is used to indicate at least one of the following:
the UE supports that the receive timing difference is larger than CP length;
the UE does not support that the receive timing difference is larger than CP length;
the UE supports that the receive timing difference is less than or equal to CP length;
the UE supports simultaneous measurement of non-synchronized cells;
the UE does not support simultaneous measurement of non-synchronized cells;
the UE supports simultaneous L1 measurement for cells when the receive timing difference among the cells is larger than CP length;
the UE does not support simultaneous L1 measurement for cells when the receive timing difference among the cells is larger than CP length.

Here, whether the UE supports a receive timing difference larger than CP length, whether the UE supports simultaneous measurement of non-synchronized cells, and whether the UE supports simultaneous L1 measurement for cells when the receive timing difference among the cells is larger than CP length, are related to the UE's implementation algorithm and processing capability. Different UEs employ different methods for performing L1 measurement, which affects performance of L1 measurement supported by the UEs, such as the number of cells measured, measurement delay, scheduling opportunities (scheduling opportunities may also be described as scheduling gaps), measurement restrictions, etc. If the UE supports a receive timing difference larger than CP length, it can be assumed that the UE supports at least 2 Fast Fourier Transforms (FFTs), and the UE can simultaneously perform measurement for at least 2 cells, without needing to filter L1 measurement through L3 measurement. If the UE does not support a receive timing difference larger than CP length (or described as the receive timing difference supported by the UE is not larger than CP length), it can be assumed that the UE has only 1 FFT and can perform only measurement for one cell at a time, and measurement for multiple cells needs to be performed serially, resulting in a larger measurement delay. Reporting the receive timing difference information to the network can assist the network in determining the measurement delay of the UE and how to perform data scheduling, etc. The receive timing difference information includes at least one of the following: the UE supports a receive timing difference larger than CP length, the UE does not support a receive timing difference larger than CP length, the UE supports a receive timing difference less than or equal to CP length, the UE supports simultaneous L1 measurement for cells when the receive timing difference among the cells is larger than CP length, or the UE does not support simultaneous L1 measurement for cells when the receive timing difference among the cells is larger than CP length.

The UE supports that the receive timing difference is larger than CP length can also be described as the UE supports measurement for cells when the receive timing difference is larger than CP length.

Simultaneous measurement for non-synchronized cells can also be described as simultaneous measurement for non-synchronized cells on the same frequency. If the UE supports simultaneous measurement for non-synchronized cells, compared to not supporting simultaneous measurement for non-synchronized cells, measurement can be completed faster, thereby reducing measurement delay.

The UE supports simultaneous L1 measurement for cells when the receive timing difference among the cells is larger than CP length can also be described as, for cells when the receive timing difference among the cells is larger than CP length, the UE supports performing L1 measurement for them simultaneously; or described as when the receive timing difference among cells is larger than a CP length, the UE supports simultaneous L1 measurement for cells, or described as the UE supports simultaneous L1 measurement for cells when the receive timing difference among the cells is larger than CP length.

It is to be noted that the receive timing difference is related to at least one of the following: cell synchronization state (whether the cell is a synchronized cell), transmission delay or transmission delay difference from the cell to the UE.

In order to facilitate the network side to screen cells or frequency layers for L1 measurement, so that the UE can use its limited L1 measurement capability for measuring potential target cells, in one embodiment, the first information is used to indicate at least one of the following:
simultaneous L1 measurement for N cells when the receive timing difference is larger than CP length, where N is an integer larger than 1; or
simultaneous L1 measurement on a same symbol for N cells when the receive timing difference is larger than CP, where N is an integer larger than 1.

Simultaneous L1 measurement for N cells when the receive timing difference is larger than CP, can also be described as: support of simultaneous L1 measurement for more than 1 cell when the receive timing difference is larger than CP, or described as simultaneous L1 measurement for more than one cell when the receive timing difference among the cells is larger than the CP length, or described as simultaneous L1 measurement for more than one cell when the receive timing difference among the cells is larger than CP, or described as when the receive timing difference among the cells is larger than the CP length, the UE supports simultaneous L1 measurement for more than one cell, or described as the UE supports simultaneous L1 measurement for more than one cell when the max receive timing difference among the cells is larger than CP length.

In order to facilitate the network side to determine cells or frequency layers for L1 measurement, in one embodiment, the second information indicates at least one of the following:
a maximum number of cells for measurement;
a maximum number of frequency layers for measurement;
a maximum number of cells in report;
a maximum number of beams in report;
a maximum value of a product of the number of cells in report and the number of beams in report;
the number of cells for measurement;
the number of frequency layers for measurement;
the number of cells in report;
the number of beams in report.

Here, the UE can report measurement capability and/or report capability to the network. The measurement capability may include at least one of the following: a maximum number of cells for measurement, a maximum number of frequency layers for measurement, the number of cells for measurement, or the number of frequency layers for measurement. The reporting capability may include at least one of the following: a maximum number of cells in report, a maximum number of beams in report, a maximum value of a product of the number of cells in report and the number of beams in report, the number of cells in report, or the number of beams in report.

The maximum number of cells for measurement can be described as the maximum number of cells for measurement, or described as the maximum number of cells for Layer 1 (L1) measurement. Further, the maximum number of cells for measurement can also be understood as the number of cells for which the UE supports performing L1 measurement, or represented by the maximum number of cells for which the UE supports performing L1 measurement. Because the UE's processing capability is limited, it cannot perform L1 measurement for a large number of cells. Through this information (maximum number of cells for measurement), the network can be informed of the number of cells for which the UE supports performing Layer 1 measurement. The number of cells configured by the network cannot exceed the maximum number of cells for measurement. The maximum number of cells for measurement can also be described as a maximum value of the number of candidate cells configured by RRC for L1-RSRP measurement.

The maximum number of frequency layers for measurement can be described as a maximum value of the number of frequency layers for measurement, or described as a maximum number of frequency layers for L1 measurement, or represented by a maximum value of the number of frequency layers for which the UE supports performing L1 measurement. Because the UE's processing capability is limited, it cannot perform L1 measurement for a large number of frequency layers. Through this information (maximum number of frequency layers for measurement), the network can be informed of the number of frequency layers for which the UE supports performing Layer 1 measurement, and the number of frequency layers configured by the network cannot exceed this value. The maximum number of frequency layers for measurement can also be described as a maximum value of the number of frequency layers configured by RRC for L1-RSRP measurement.

The maximum number of cells in report can be described as a maximum number of cells supported for reporting, and can also be described as a maximum number of cells in one report. The UE reports measurement results of L1 measurement. The maximum number of cells in report can be understood as a maximum number of cells that the UE supports in one report for L1 measurement. For example, if a value of the maximum number of cells in report is M, it can be understood that the number of cells reported by the UE for L1 measurement does not exceed M. Because of limitations in resources and signaling overhead, the UE does not necessarily need to report all cell results of the measured cells. For example, if P cells are measured, the UE will report results of at most M cells, where M≤P. This information (maximum number of cells in report) can assist the network in knowing the number of cells the UE can report, thereby performing corresponding resource configuration.

The maximum number of beams in report can be described as a maximum number of beams supported for reporting, and can also be described as a maximum number of beams in one report. The maximum number of beams in report at least includes a maximum number of beams per cell in one report, and/or a maximum number of beams in total across M cells in one report. M cells could be all cells. The UE will report measurement results of L1 measurement. The maximum number of beams in report can be understood as a maximum number of beams for which the UE supports performing L1 reporting. For example, if a value of the maximum number of beams in report is L, it can be understood that the number of beams reported by the UE for L1 measurement does not exceed L. Because of limitations in resources and signaling overhead, the UE does not necessarily need to report all L1-RSRP of the measured beams. This information (maximum number of beams in report) can assist the network in knowing the number of cells the UE can report, thereby performing corresponding resource configuration.

The maximum value of the product of the number of cells in report and the number of beams in report is not necessarily the product of the "maximum number of cells in report" and the "maximum number of beams in report", and may be less than the product of the two.

The number of cells for measurement can be described as the number of cells for L1-RSRP measurement, or described as the number of neighbor cells for L1-RSRP measurement. The number of cells for measurement includes at least one of the number of intra-frequency cells or the number of inter-frequency cells.

In order to facilitate the network to screen cells or frequency layers for L1 measurement, in one embodiment, the second information includes at least one of the following:
RSRP;
SSB index;
CSI-RS index; or
cell identity.

Here, the measurement report or measurement result reported by the UE to the network may include at least one of the following: RSRP, SSB index, CSI-RS index, or cell identity.

RSRP includes absolute RSRP and/or differential RSRP. The absolute RSRP is usually the highest RSRP. The differential RSRP is a difference between RSRP of other beams and the highest RSRP. This solution can reduce the number of bits for information reporting, and reducing signaling overhead.

The SSB index can be described as a resource indicator (SS/PBCH Block Resource Indicator, SSBRI), or described as an SSB number. Specifically, the SSB number can be a numbering of a total of K beams from M cells.

The cell identity may be a PCI.

In one embodiment, the performing L1 measurement includes at least one of the following:
performing L3 measurement;
performing L3 reporting; or
reporting L3 measurement result.

Here, regarding the mismatch problem between the mobility multi-frequency/cell measurement requirement and the L1 measurement capability of the UE, L3 measurement is used to filter subsequent L1 measurement, thereby reducing targets for L1 measurement (the targets can be described as measurement targets), where the targets include the number of cells, frequency layers, and beams, thereby making L1 measurement more focused and allowing the UE to use its limited measurement capability for measuring potential target cells. The advantage of this solution is that the network can configure multiple candidate cells, but the UE can first perform L3 measurement; the UE can first perform L3 measurement, and after filtering based on L3 results (either based on the UE's own determination or based on a network indication), the UE further converges on potential candidate targets for L1 measurement. The L3 measurement can also be described as Radio Resource Management (RRM) measurement, or mobility measurement, or described as measurement on a measurement target or measurement object (MO). MO can also be described as a frequency.

It is to be noted that a module for the UE to perform L3 measurement is usually independent of a demodulation module, and L3 measurement of neighbor cells is not subject to strict timing synchronization constraints, and L3 measurement of multiple cells can also be supported. The module for the UE to perform L1 measurement can be integrated into the demodulation module. L3 measurement results may include at least one of Reference Signal Receiving Quality (RSRQ), RSRP, or SINR of the measurement target or target (cell, frequency, beam).

In case that the UE has performed L3 measurement for L1-triggered mobility and obtained L3 measurement results, or on the basis that the UE performs L3 reporting and/or reports L3 measurement results, the UE can autonomously determine cells or frequency layers for L1 measurement based on the L3 measurement results. Based on this, in one embodiment, the performing L1 measurement includes at least one of the following:
performing L1 measurement for cells or frequency layers whose L3 measurement results are larger than or equal to a first threshold; or
performing L1 measurement for cells or frequency layers whose L3 signal quality of a neighbor cell is at least higher than a signal quality of a serving cell by a second threshold.

Here, the UE can determine, based on the L3 measurement result, cells or frequency layers whose L3 measurement results are larger than or equal to the first threshold, and perform L1 measurement for the cells or frequency layers whose L3 measurement results are larger than or equal to the first threshold. For cells or frequency layers whose L3 measurement results are less than the first threshold, the UE does not perform L1 measurement. The cell can be described as a neighbor cell, an intra-frequency neighbor cell, an inter-frequency neighbor cell, or described as a candidate cell for L1-triggered mobility, where the candidate cell is a cell other than the serving cell. The frequency can be described as a frequency of an intra-frequency neighbor cell, a frequency of an inter-frequency neighbor cell, or described as a candidate frequency for L1-triggered mobility, where the candidate frequency is a frequency other than the frequency of the serving cell.

The UE can also determine, based on the L3 measurement result, cells or frequency layers whose L3 signal quality of a neighbor cell is at least higher (higher can be described as exceeding or being larger than) than the signal quality of the serving cell by a second threshold, and perform L1 measurement for the cells or frequency layers whose L3 signal quality of the neighbor cell is at least higher than the signal quality of the serving cell by the second threshold. For cells whose L3 signal quality of the neighbor cell is lower than the signal quality of the serving cell by the second threshold, the UE does not perform L1 measurement.

In order to successfully perform L1-RSRP measurement and minimize data packet loss during the L1-RSRP measurement process, so as to improve the reliability of data transmission, in one embodiment, the method further includes at least one of the following:
not receiving PDCCH and/or PDSCH and/or CSI-RS for tracking and/or CSI-RS for CQI, on SSBs configured for L1-RSRP measurement;
not transmitting PUSCH and/or PUCCH and/or SRS, on SSBs configured for L1-RSRP measurement;
not receiving PDCCH and/or PDSCH and/or CSI-RS for tracking and/or CSI-RS for CQI, on one symbol before the SSB configured for L1-RSRP measurement;
not transmitting PUSCH and/or PUCCH and/or SRS, on one symbol before the SSB configured for L1-RSRP measurement;
not receiving PDCCH and/or PDSCH and/or CSI-RS for tracking and/or CSI-RS for CQI, on one symbol after the SSB configured for L1-RSRP measurement; or
not transmitting PUSCH and/or PUCCH and/or SRS, on one symbol after the SSB configured for L1-RSRP measurement.

Here, in the related art, the UE performs L1-RSRP measurement only for the serving cell, which does not affect data scheduling. The data scheduling includes at least one of the following: reception of PDSCH, reception of PDCCH, reception of CSI-RS, transmission of PUCCH, transmission of PUSCH, transmission of SRS. However, LTM L1-RSRP is to perform L1-RSRP measurement for neighbor cells, where neighbor cells include intra-frequency neighbor cells and inter-frequency neighbor cells. Since the arrival time from different cells to the UE are different with different beam directions, data scheduling of the serving cell may not be possible when performing L1-RSRP measurement on neighbor cells. In this embodiment, it specifies at which locations the UE may refrain from data transmission/reception, and also assists the network in determining at which locations data scheduling should not be performed.

The SSB configured for L1-RSRP measurement can be described as a configured SSB for L1-RSRP measurement, or described as symbols corresponding to the SSB configured for L1-RSRP measurement. The L1-RSRP measurement can also be described as LTM L1-RSRP measurement.

A symbol can be described as an Orthogonal Frequency Division Multiplexing (OFDM) symbol.

The receiving PDCCH and/or PDSCH and/or CSI-RS for tracking and/or CSI-RS for CQI, can be understood as receiving at least one of PDCCH, PDSCH, CSI-RS for tracking, or CSI-RS for CQI.

The transmitting PUSCH and/or PUCCH and/or SRS can be understood as transmitting at least one of PUSCH, PUCCH, or SRS.

After the UE reports, to the network, L3 measurement results related to L1-based mobility, the network device further indicates to the UE, cells, frequency layers, or SSBs for L1 measurement. Based on this, in one embodiment, the method further includes:
receiving third information transmitted by the network, where the third information includes at least one of a cell identity, a frequency, or a Synchronization Signal Block (SSB), for performing L1 measurement.

Here, the UE may receive, before performing L1 measurement, the third information transmitted by the network.

As an implementation, based on the L3 measurement results reported by the UE, the network can screen out the N cells/frequency layers/beams with best RSRP/SINR/RSRQ and configure them for the UE to perform L1 measurement for mobility. As an implementation, in addition to referring to the L3 measurement results reported by the UE, the network can also consider factors such as capacity and load to determine the M cells/frequency layers/beams configured for the UE to perform L1 measurement. That is, if a cell/frequency/beam has good channel conditions but a correspondingly high load, the network may also choose not to select that cell/frequency/beam for the UE to perform L1 measurement.

In the embodiments of the present disclosure, based on the L3 measurement results, the network directly indicates the cell identities and/or frequency layers and/or SSBs for performing L1 measurement, to the UE. The UE does not need to screen, based on the L3 measurement results, cells, frequency layers, and SSBs for L1 measurement, which can reduce the amount of data processing by the UE.

In one embodiment, the method further includes:
receiving fourth information transmitted by the network, where the fourth information indicates at least one of the following:
correspondence between SSB index and cell identity; or
correspondence between CSI-RS index and cell identity.

Here, the UE may receive, before performing L1 measurement, the fourth information transmitted by the network.

The correspondence between SSB index and cell identity can also be described as mapping between SSB index and cell identity, or corresponding between SSB and cell identity, or association between SSB index and cell identity, or mapping between SSB and cell identity. The cell identity can be described as a physical cell identity of cell of LTM candidate configuration. The SSB index is used to indicate an SSB resource from an LTM candidate cell. SSB can also be described as SS/PBCH block. The correspondence between SSB index and cell identity includes: a cell identity corresponding to or associated with a first index (or described as a first identifier) (e.g., the first index can be numbers 1, 2, 3, ..., and so on. Cell identity_3 corresponds to or is associated with a first index of 1, cell identity_8 corresponds to or is associated with a first index of 2, ..., and so on), and the first index or first identifier corresponding to or associated with an SSB index (e.g., a first value in a list of first indices (e.g., the first value is 1) corresponds to a first value in an SSB resource list (e.g., SSB index_1); a second value in the list of first indices (e.g., the second value is 2) corresponds to a second value in the SSB resource list (e.g., SSB index 3); ..., and so on). Through this method, the correspondence or association between the SSB index and the cell identity is achieved (e.g., with the above example, the association between cell identity_3 and SSB index_1 is achieved, and the association between cell identity_8 and SSB index_3 is achieved). This method can reduce signaling overhead while achieving the correspondence between the SSB index and the cell identity (because the cell identity, or described as a physical cell identity, occupies more signaling overhead than a simple numerical index). Specifically, the network configures M cells (different cells have different PCIs), each cell corresponds to P beams, then the network uniformly numbers a total of M×P SSBs, for example, using SSBRI to identify SSBs.

Table 1 shows an example of a mapping relationship between SSBs and SSBRIs for PCI1.

**Table 1**

| | |
|---|---|
| SSB index1 | SSBRI=0 |
| SSB index2 | SSBRI=1 |
| SSB index4 | SSBRI=2 |

Table 2 shows an example of a mapping relationship between SSBs and SSBRIs for PCI2.

**Table 2**

| | |
|---|---|
| SSB index2 | SSBRI=3 |
| SSB index3 | SSBRI=4 |
| SSB index6 | SSBRI=5 |

It is to be noted that after the UE obtains the fourth information, when subsequently reporting measurement results, the UE may not report the corresponding cell identity, which can reduce the reporting overhead of the UE. Based on the SSBRI, the UE can know which cell and which beam the SSB (or beam) belongs to. The RSRP corresponding to the SSBRI is a measurement result of the corresponding beam of the corresponding cell.

Since L3 measurement for L1-triggered mobility and L3 measurement for handover compete for measurement resources, in order to facilitate the network to know whether the UE supports using L3 measurement results in L1 reporting, so that the network can tendentiously instruct the UE's behavior according to actual needs, based on this, in one embodiment, the method further includes:
transmitting fifth information to the network, where the fifth information is used to indicate at least one of the following:
support for using L3 measurement results in L1 reporting; or
not support for using L3 measurement results in L1 reporting.

Here, the UE may transmit, before performing L1 measurement, the fifth information to the network.

The L1 reporting can be described as L1 measurement reporting. In case that the fifth information indicates that the UE supports using L3 measurement results in L1 reporting, the UE may prioritize performing L3 measurement for L1-triggered mobility. In case that the fifth information indicates that the UE does not support using L3 measurement results in L1 reporting, the UE prioritizes performing L3 measurement for handover. The support for using L3 measurement results in L1 reporting can be understood as reporting L3 measurement results in L1 measurement reporting.

The number of frequency layers or cells or beams for L3 measurement for handover supported by the UE far exceeds the number (possibly 1 or 2) of frequency layers or cells or beams for L3 measurement for L1-triggered mobility. By taking frequency layers as an example, the number of frequency layers for L3 measurement for handover supported by the UE is at least 7, while the number of frequency layers for L3 measurement for L1-triggered mobility supported by the UE is 1 or 2. Since L3 measurement for L1-triggered mobility and L3 measurement for handover compete for measurement resources, the network can tendentiously instruct the UE's behavior based on the fifth information. For example, when mobility requirements are high (need to be completed quickly), the network can instruct the UE to prioritize completing L3 measurement for L1-triggered mobility. When robustness requirements are high, the network can instruct the UE to prioritize completing L3 measurement for handover.

In some embodiments, the method further includes:
receiving sixth information transmitted by the network, where the sixth information is used to indicate that a measurement target is used for L1 measurement.

Here, the UE may receive, before performing L1 measurement, the sixth information transmitted by the network. The sixth information may be transmitted based on the fifth information, or may be transmitted before the UE performs L1 measurement. The fifth information may be reported to the network before the UE performs L1 measurement. The sixth information may also be used to indicate that the measurement target is used for L3 measurement for L1-triggered mobility. It is to be noted that the sixth information may also include a priority for L3 measurement for handover and a priority for L3 measurement for L1-triggered mobility.

The measurement target can be described as a measurement object. The measurement target includes at least one of a cell identity, a frequency, or an SSB.

In case that the sixth information is received, the UE performs L1 measurement based on the first information. Based on this, in one embodiment, the method further includes:
prioritizing measurement of a measurement target for L1 measurement.

Here, the prioritizing measurement of a measurement target for L1 measurement can be understood as: when the measurement target includes a measurement target for L3 measurement and a measurement target for L1 measurement, prioritizing measurement of the measurement target for L1 measurement. That is, the priority of the measurement target for L1 measurement is higher than the priority of the measurement target for L3 measurement. The measurement target for L1 measurement can be understood as a measurement target for L3 measurement for L1-triggered mobility, or a measurement target that supports both L1 measurement and L3 measurement. The measurement target for L3 measurement can be understood as a measurement target for L3 measurement for handover, or a measurement target that supports L3 measurement but do not support L1 measurement.

For example, when the network configures multiple measurement targets, measurement targets for L1 measurement can be determined from the network-configured measurement targets; and L3 measurement is prioritized for the measurement targets for L1 measurement to obtain L3 measurement results. Based on the L3 measurement results, the demand for subsequent L1 measurements is reduced.

Correspondingly, one embodiment of the present disclosure further provides a measurement method, applied to a network. The network can be described as a network device, a network side device, or a base station. As shown in FIG. 2, the method includes:
Step 201: receiving first information and/or second information transmitted by a UE.

The first information is related to a receive timing difference; and the second information is related to report and/or measurement.

The first information is used to indicate at least one of the following:
the UE supports that a receive timing difference is larger than CP;
the UE does not support that a receive timing difference is larger than CP;
the UE supports that a receive timing difference is less than or equal to CP length;
the UE supports simultaneous measurement of non-synchronized cells;
the UE does not support simultaneous measurement of non-synchronized cells;
the UE supports simultaneous L1 measurement for cells when the receive timing difference among the cells is larger than CP; or
the UE does not support simultaneous L1 measurement for cells when the receive timing difference among the cells is larger than CP.

The first information is used to indicate at least one of the following:
simultaneous L1 measurement for N cells when the receive timing difference is larger than CP, where N is an integer larger than 1; or
simultaneous L1 measurement on a same symbol for N cells when the receive timing difference is larger than CP, where N is an integer larger than 1.

Here, in case that the UE supports a receive timing difference larger than CP, the network may not transmit third information and/or sixth information to the UE, i.e., the UE does not need to filter L1 measurement through L3 measurement. In case that the UE does not support a receive timing difference larger than CP, or the UE supports a receive timing difference less than or equal to CP length, or the UE does not support simultaneous measurement of non-synchronized cells, the network needs to transmit third information and/or sixth information to the UE, i.e., the UE needs to filter L1 measurement through L3 measurement.

The second information indicates at least one of the following:
a maximum number of cells for measurement;
a maximum number of frequency layers for measurement;
a maximum number of cells in report;
a maximum number of beams in report;
a maximum value of a product of the number of cells in report and the number of beams in report;
the number of cells for measurement;
the number of frequency layers for measurement;
the number of cells in report; or
the number of beams in report.

The second information includes at least one of the following:
RSRP;
SSB index;
CSI-RS index; or
cell identity.

In one embodiment, the method further includes:
transmitting third information to the UE, where the third information includes at least one of a cell identity, a frequency, or an SSB, for performing L1 measurement.

Here, the network may transmit the third information to the UE before the UE performs L1 measurement. For example, in case of receiving a measurement result of L3 measurement for L1-triggered mobility reported by the UE, a measurement target ultimately requiring L1 measurement can be screened out based on the L3 measurement result, and the third information is transmitted to the UE to reduce the demand for L1 measurement. The measurement target includes at least one of a cell identity, a frequency, or an SSB.

In order to facilitate the UE to know a correspondence between SSBs and/or CSI-RSs and cells, so as to reduce the reporting overhead of the UE, in one embodiment, the method further includes:
transmitting fourth information to the UE, where the fourth information indicates at least one of the following:
a correspondence between SSB index and cell identity; or
a correspondence between CSI-RS index and cell identity.

Here, the network may transmit the fourth information to the UE before the UE performs L1 measurement.

In order to facilitate the network to know whether the UE supports using L3 measurement results in L1 reporting, so that the network can tendentiously instruct the UE's behavior according to actual needs, based on this, in one embodiment, the method further includes:
receiving fifth information transmitted by the UE, where the fifth information is used to indicate at least one of the following:
support for using L3 measurement results in L1 reporting; or
not support for using L3 measurement results in L1 reporting.

Here, the fifth information may be transmitted by the UE before the UE performs L1 measurement. The network can determine, based on the fifth information, whether the UE supports using L3 measurement results in L1 reporting, so as to determine whether to instruct the UE to filter L1 measurement requirements through L3 measurement. In case that the UE supports using L3 measurement results in L1 reporting, the UE supports filtering L1 measurement requirements through L3 measurement.

In order to facilitate the UE to perform L3 measurement for L1-triggered mobility, so as to reduce the demand for subsequent L1 measurement based on the L3 measurement results, in one embodiment, the method further includes:

transmitting sixth information to the UE, where the sixth information is used to indicate that a measurement target is used for L1 measurement.

Here, the network may transmit the sixth information to the UE before the UE performs L1 measurement.

In order to implement the method on the UE side of the embodiments of the present disclosure, one embodiment of the present disclosure further provides a measurement apparatus, applied to a UE. As shown in FIG. 3, the apparatus includes:
a measurement unit 301 used to perform L1 measurement; and/or
a first transmission unit 302 used to transmit first information and/or second information to a network, where the first information is related to a receive timing difference; and the second information is related to report and/or measurement.

In one embodiment, the measurement unit 301 is specifically used to perform L3 measurement; and/or, the first transmission unit 302 is further used to perform L3 reporting and/or report an L3 measurement result.

In one embodiment, the measurement unit 301 is specifically used to perform at least one of the following:
performing L1 measurement for cells or frequency layers whose L3 measurement results are larger than or equal to a first threshold; or
performing L1 measurement for cells or frequency layers whose L3 signal quality of a neighbor cell is at least higher than a signal quality of a serving cell by a second threshold.

In one embodiment, the apparatus further includes:
a second receiving unit used to receive third information transmitted by the network, where the third information includes at least one of a cell identity, a frequency, or a Synchronization Signal Block (SSB), for performing L1 measurement.

In one embodiment, the first information is used to indicate at least one of the following:
the UE supports that a receive timing difference is larger than CP;
the UE does not support that a receive timing difference is larger than CP;
the UE supports that a receive timing difference is less than or equal to CP length;
the UE supports simultaneous measurement of non-synchronized cells;
the UE does not support simultaneous measurement of non-synchronized cells;
the UE supports simultaneous L1 measurement for cells when the receive timing difference among the cells is larger than CP length; or
the UE does not support simultaneous L1 measurement for cells when the receive timing difference among the cells is larger than CP length.

In one embodiment, the first information is used to indicate at least one of the following:
simultaneous L1 measurement for N cells when the receive timing difference is larger than CP length, where N is an integer larger than 1; or
simultaneous L1 measurement on a same symbol for N cells when the receive timing difference is larger than CP length, where N is an integer larger than 1.

In one embodiment, the second information indicates at least one of the following:
a maximum number of cells for measurement;
a maximum number of frequency layers for measurement;
a maximum number of cells in report;
a maximum number of beams in report;
a maximum value of a product of the number of cells in report and the number of beams in report;
the number of cells for measurement;
the number of frequency layers for measurement;
the number of cells in report; or
the number of beams in report.

In one embodiment, the second information includes at least one of the following:
RSRP;
SSB index;
CSI-RS index; or
cell identity.

In one embodiment, the apparatus further includes:
a third receiving unit used to receive fourth information transmitted by the network, where the fourth information indicates at least one of the following:
a correspondence between SSB index and cell identity; or
a correspondence between CSI-RS index and cell identity.

In one embodiment, the apparatus further includes a transceiving unit used to perform at least one of the following:
not receiving PDCCH and/or PDSCH and/or CSI-RS for tracking and/or CSI-RS for CQI, on SSBs configured for L1-RSRP measurement;
not transmitting PUSCH and/or PUCCH and/or SRS, on SSBs configured for L1-RSRP measurement;
not receiving PDCCH and/or PDSCH and/or CSI-RS for tracking and/or CSI-RS for CQI, on one symbol before the SSB configured for L1-RSRP measurement;
not transmitting PUSCH and/or PUCCH and/or SRS, on one symbol before the SSB configured for L1-RSRP measurement;
not receiving PDCCH and/or PDSCH and/or CSI-RS for tracking and/or CSI-RS for CQI, on one symbol after the SSB configured for L1-RSRP measurement; or
not transmitting PUSCH and/or PUCCH and/or SRS, on one symbol after the SSB configured for L1-RSRP measurement.

In one embodiment, the apparatus further includes:
a second transmission unit used to transmit fifth information to the network, where the fifth information is used to indicate at least one of the following:
support for using L3 measurement results in L1 reporting; or
not support for using L3 measurement results in L1 reporting.

In one embodiment, the apparatus further includes:
a fourth receiving unit used to receive sixth information transmitted by the network, where the sixth information is used to indicate that a measurement target is used for L1 measurement.

In one embodiment, the measurement unit 301 is further used to prioritize measurement of a measurement target for L1 measurement.

In practical application, the measurement unit 301 may be implemented by a processor in the measurement apparatus, and the first transmission unit 302, the second transmission unit, the second receiving unit, the third receiving unit, the fourth receiving unit, and the transceiving unit may be implemented by the processor in the measurement apparatus in conjunction with a communication interface.

In order to implement the method on the UE side of the embodiments of the present disclosure, one embodiment of the present disclosure further provides a measurement apparatus, applied to a network device. As shown in FIG. 4, the apparatus includes:
a first receiving unit 401 used to receive first information and/or second information transmitted by a UE; where the first information is related to a receive timing difference; and the second information is related to report and/or measurement.

In one embodiment, the apparatus further includes:
a third transmission unit used to transmit third information to the UE, where the third information includes at least one of a cell identity, a frequency, or an SSB, for performing L1 measurement.

In one embodiment, the apparatus further includes:
a fourth transmission unit used to transmit fourth information to the UE, where the fourth information indicates at least one of the following:
a correspondence between SSB index and cell identity; or
a correspondence between CSI-RS index and cell identity.

In one embodiment, the apparatus further includes:
a fifth receiving unit used to receive fifth information transmitted by the UE, where the fifth information is used to indicate at least one of the following:
support for using L3 measurement results in L1 reporting; or
not support for using L3 measurement results in L1 reporting.

In one embodiment, the apparatus further includes:
a fifth transmission unit used to transmit sixth information to the UE, where the sixth information is used to indicate that a measurement target is used for L1 measurement.

In practical application, the first receiving unit 401, the third transmission unit, the fourth transmission unit, the fifth transmission unit, and the fifth receiving unit may be implemented by a processor in the measurement apparatus in conjunction with a communication interface.

It is to be noted that when the measurement apparatus provided in the above embodiments performs the measurement, division of the above program modules are only used as an example. In practical applications, the above processing may be assigned to different program modules as needed, i.e., the internal structure of the apparatus is divided into different program modules to complete all or part of the processing described above. In addition, the measurement apparatus provided in the above embodiments and the measurement method embodiments belong to the same concept, and the specific implementation process thereof is detailed in the method embodiments, which will not be repeated here.

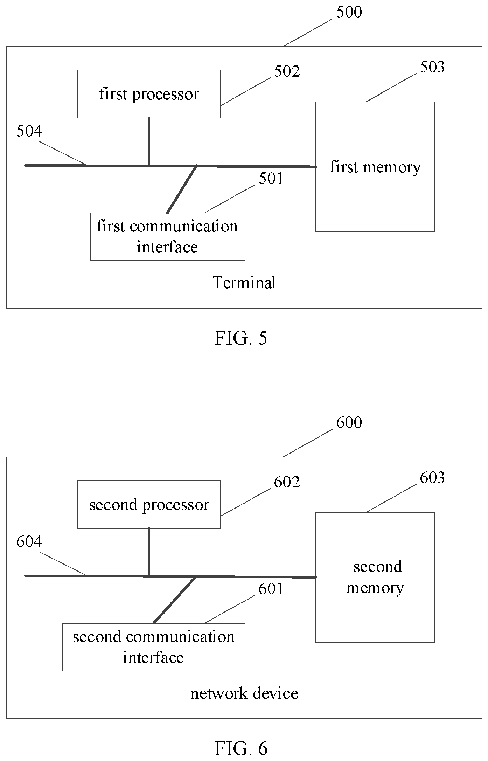

Based on the hardware implementation of the above program modules, and in order to implement the method on the UE side of the embodiments of the present disclosure, one embodiment of the present disclosure further provides a UE. As shown in FIG. 5, a UE 500 includes:
a first communication interface 501 capable of performing information interaction with other network nodes;
a first processor 502 coupled to the first communication interface 501 for information interaction with other network nodes, and used to, when running a computer program, execute the method of one or more technical solutions on the UE side. The computer program is stored in a first memory 503.

Specifically, the first processor 502 is used to perform L1 measurement;
the first communication interface 501 is used to transmit first information and/or second information to a network, where the first information is related to a receive timing difference, and the second information is related to report and/or measurement.

In one embodiment, the first processor 502 is specifically used to perform L3 measurement; and/or, the first communication interface is used to perform L3 reporting and/or report L3 measurement results.

In one embodiment, the first processor 502 is specifically used to perform at least one of the following:
performing L1 measurement for cells or frequency layers whose L3 measurement results are larger than or equal to a first threshold; or
performing L1 measurement for cells or frequency layers whose L3 signal quality of a neighbor cell is at least higher than a signal quality of a serving cell by a second threshold.

In one embodiment, the first communication interface 501 is further used to receive third information transmitted by the network, where the third information includes at least one of a cell identity, a frequency, or an SSB, for performing L1 measurement.

In one embodiment, the first information is used to indicate at least one of the following:
the UE supports that a receive timing difference is larger than CP length;
the UE does not support that a receive timing difference is larger than CP length;
the UE supports that a receive timing difference is less than or equal to CP length;
the UE supports simultaneous measurement of non-synchronized cells;
the UE does not support simultaneous measurement of non-synchronized cells;
the UE supports simultaneous L1 measurement for cells when the receive timing difference among the cells is larger than CP length; or
the UE does not support simultaneous L1 measurement for cells when the receive timing difference among the cells is larger than CP length.

In one embodiment, the first information is used to indicate at least one of the following:
L1 measurement for N cells when the receive timing difference is larger than CP length, where N is an integer larger than 1; or
simultaneous L1 measurement on a same symbol for N cells when the receive timing difference is larger than CP length, where N is an integer larger than 1.

In one embodiment, the second information indicates at least one of the following:
a maximum number of cells for measurement;
a maximum number of frequency layers for measurement;
a maximum number of cells in report;
a maximum number of beams in report;
a maximum value of a product of the number of cells in report and the number of beams in report;
the number of cells for measurement;
the number of frequency layers for measurement;
the number of cells in report; or
the number of beams in report.

In one embodiment, the second information includes at least one of the following:
RSRP;
SSB index;
CSI-RS index; or
cell identity.

In one embodiment, the first communication interface 501 is further used to receive fourth information transmitted by the network, where the fourth information indicates at least one of the following:
a correspondence between SSB index and cell identity; or
a correspondence between CSI-RS index and cell identity.

In one embodiment, the first communication interface 501 is further used to perform at least one of the following:
not receiving PDCCH and/or PDSCH and/or CSI-RS for tracking and/or CSI-RS for CQI, on SSBs configured for L1-RSRP measurement;
not transmitting PUSCH and/or PUCCH and/or SRS, on SSBs configured for L1-RSRP measurement;
not receiving PDCCH and/or PDSCH and/or CSI-RS for tracking and/or CSI-RS for CQI, on one symbol before the SSB configured for L1-RSRP measurement;
not transmitting PUSCH and/or PUCCH and/or SRS, on one symbol before the SSB configured for L1-RSRP measurement;
not receiving PDCCH and/or PDSCH and/or CSI-RS for tracking and/or CSI-RS for CQI, on one symbol after the SSB configured for L1-RSRP measurement; or
not transmitting PUSCH and/or PUCCH and/or SRS, on one symbol after the SSB configured for L1-RSRP measurement.

In one embodiment, the first communication interface 501 is further used to transmit fifth information to the network, where the fifth information is used to indicate at least one of the following:
support for using L3 measurement results in L1 reporting; or
not support for using L3 measurement results in L1 reporting.

In one embodiment, the first communication interface 501 is further used to receive sixth information transmitted by the network, where the sixth information is used to indicate that a measurement target is used for L1 measurement.

In one embodiment, the first processor 502 is further used to prioritize measurement of a measurement target for L1 measurement.

It is to be noted that the specific processing procedure of the first processor 502 and the first communication interface 501 can be understood with reference to the above method.

Of course, in practical application, various components in the UE 500 are coupled together via a bus system 504. It can be understood that the bus system 504 is used to realize connection and communication between these components. The bus system 504 includes, in addition to a data bus, a power bus, a control bus, and a status signal bus. However, for clarity of illustration, various buses are marked as the bus system 504 in FIG. 5.

The first memory 503 in the embodiment of the present disclosure is used to store various types of data to support operations of the UE 500. Examples of such data include any computer program for operating on the UE 500.

The methods disclosed in the above embodiments of the present disclosure may be applied to the first processor 502, or implemented by the first processor 502. The first processor 502 may be an integrated circuit chip having signal processing capabilities. During implementation, each step of the above method may be completed by an integrated logic circuit of hardware in the first processor 502 or instructions in the form of software. The above first processor 502 may be a general-purpose processor, a digital signal processor (DSP), or other programmable logic devices, discrete gate or transistor logic devices, discrete hardware components, etc. The first processor 502 may implement or execute the methods, steps, and logical block diagrams disclosed in the embodiments of the present disclosure. The general-purpose processor may be a microprocessor or any conventional processor, etc. The steps of the methods disclosed in conjunction with the embodiments of the present disclosure may be directly embodied as being executed by a hardware decoding processor, or executed by a combination of hardware and software modules in the decoding processor. The software module may be located in a storage medium; and the storage medium is located in the first memory 503. The first processor 502 reads information in the first memory 503 and completes the steps of the foregoing method in combination with its hardware.

In an exemplary embodiment, the UE 500 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, for executing the aforementioned methods.

Based on the hardware implementation of the above program modules, and in order to implement the method on the network side of the embodiments of the present disclosure, one embodiment of the present disclosure further provides a network device. As shown in FIG. 6, the network device 600 includes:
a second communication interface 601 capable of performing information interaction with other network nodes;
a second processor 602 coupled to the second communication interface 601 for information interaction with other network nodes, and used to, when running a computer program, execute the method of one or more technical solutions on the network side. The computer program is stored in a second memory 603.

Specifically, the second communication interface 601 is used to receive first information and/or second information transmitted by a UE, where the first information is related to a receive timing difference, and the second information being related to report and/or measurement.

In one embodiment, the second communication interface 601 is further used to transmit third information to the UE, where the third information includes at least one of a cell identity, a frequency, or an SSB, for performing L1 measurement.

In one embodiment, the second communication interface 601 is further used to transmit fourth information to the UE, where the fourth information indicates at least one of the following:
a correspondence between SSB index and cell identity; or
a correspondence between CSI-RS index and cell identity.

In one embodiment, the second communication interface 601 is further used to receive fifth information transmitted by the UE, where the fifth information is used to indicate at least one of the following:
support for using L3 measurement results in L1 reporting; or
not support for using L3 measurement results in L1 reporting.

In one embodiment, the second communication interface 601 is further used to transmit sixth information to the UE, where the sixth information is used to indicate that a measurement target is used for L1 measurement.

It is to be noted that the specific processing procedure of the second processor 602 and the second communication interface 601 can be understood with reference to the above method.

Of course, in practical application, various components in the network device 600 are coupled together via a bus system 604. It can be understood that the bus system 604 is used to realize connection and communication between these components. The bus system 604 includes, in addition to a data bus, a power bus, a control bus, and a status signal bus. However, for clarity of illustration, various buses are marked as the bus system 604 in FIG. 6.

The second memory 603 in the embodiment of the present disclosure is used to store various types of data to support operations of the network device 600. Examples of such data include any computer program for operating on the network device 600.

The methods disclosed in the above embodiments of the present disclosure may be applied to the second processor 602, or implemented by the second processor 602. The second processor 602 may be an integrated circuit chip having signal processing capabilities. During implementation, each step of the above method may be completed by an integrated logic circuit of hardware in the second processor 602 or instructions in the form of software. The above second processor 602 may be a general-purpose processor, a DSP, or other programmable logic devices, discrete gate or transistor logic devices, discrete hardware components, etc. The second processor 602 may implement or execute the methods, steps, and logical block diagrams disclosed in the embodiments of the present disclosure. The general-purpose processor may be a microprocessor or any conventional processor, etc. The steps of the methods disclosed in conjunction with the embodiments of the present disclosure may be directly embodied as being executed by a hardware decoding processor, or executed by a combination of hardware and software modules in the decoding processor. The software module may be located in a storage medium, and the storage medium is located in the second memory 603. The second processor 602 reads the information in the second memory 603 and completes the steps of the foregoing method in combination with its hardware.

In an exemplary embodiment, the network device 600 may be implemented by one or more ASICs, DSPs, PLDs, CPLDs, FPGAs, general-purpose processors, controllers, MCUs, microprocessors, or other electronic components, for executing the aforementioned methods.

It can be understood that the memories (first memory 503 and second memory 603) in the embodiments of the present disclosure may be volatile memories or non-volatile memories, and may also include both volatile and non-volatile memories. The non-volatile memory may be Read Only Memory (ROM), Programmable Read-Only Memory (PROM), Erasable Programmable Read-Only Memory (EPROM), Electrically Erasable Programmable Read-Only Memory (EEPROM), ferromagnetic random access memory (FRAM), Flash Memory, magnetic surface memory, optical disc, or Compact Disc Read-Only Memory (CD-ROM); magnetic surface memory may be magnetic disk memory or magnetic tape memory. The volatile memory may be Random Access Memory (RAM), which is used as an external cache. By way of exemplary but not restrictive description, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), Direct Rambus Random Access Memory (DRRAM). The memories in the embodiments of the present disclosure are intended to include, but are not limited to, these and any other suitable types of memories.

In an exemplary embodiment, one embodiment of the present disclosure further provides a storage medium, i.e., a computer storage medium, specifically a computer-readable storage medium, such as a first memory 503 storing a computer program, where the computer program is executable by the first processor 502 of the UE 500 to complete the steps of the UE-side method described above. For another example, the storage medium includes a second memory 603 storing a computer program, where the computer program is executable by the second processor 602 of the network device 600 to complete the steps of the network-side method described above. The computer-readable storage medium may be FRAM, ROM, PROM, EPROM, EEPROM, Flash Memory, magnetic surface memory, optical disc, CD-ROM, or other memories.

It is to be noted that: "first", "second", etc. are used to distinguish similar objects, and are not necessarily used to describe a specific order or sequence.

In addition, the technical solutions recorded in the embodiments of the present disclosure may be combined arbitrarily without conflict.

The above description is only preferred embodiments of the present disclosure and is not intended to limit the protection scope of the present disclosure.

## Claims

1. A measurement method, performed by a User Equipment (UE), the method comprising at least one of the following:
performing layer 1 (L1) measurement;
transmitting first information to a network, wherein the first information is related to a receive timing difference;
transmitting second information to the network, wherein the second information is related to report and/or measurement.

2. The method according to claim 1, wherein the performing L1 measurement comprises at least one of the following:
performing layer 3 (L3) measurement;
performing L3 reporting; or
reporting L3 measurement result.

3. The method according to claim 2, wherein the performing L1 measurement comprises at least one of the following:
performing L1 measurement for cells or frequency layers whose L3 measurement results are larger than or equal to a first threshold; or
performing L1 measurement for cells or frequency layers whose L3 signal quality of a neighbor cell is at least higher than a signal quality of a serving cell by a second threshold.

4. The method according to claim 1 or 2, wherein the method further comprises:
receiving third information transmitted by the network, wherein the third information includes at least one of a cell identity, a frequency, or a Synchronization Signal Block (SSB), for performing L1 measurement.

5. The method according to claim 1, wherein the first information is used to indicate at least one of the following:
the UE supports that the receive timing difference is larger than cyclic prefix (CP);
the UE does not support that the receive timing difference is larger than CP length;
the UE supports that the receive timing difference is less than or equal to CP length;
the UE supports simultaneous measurement of non-synchronized cells;
the UE does not support simultaneous measurement of non-synchronized cells;
the UE supports simultaneous L1 measurement for cells when the receive timing difference among the cells is larger than CP length;
the UE does not support simultaneous L1 measurement for cells when the receive timing difference among the cells is larger than CP length.

6. The method according to claim 1, wherein the first information is used to indicate at least one of the following:
simultaneous L1 measurement for N cells when the receive timing difference is larger than CP length, where N is an integer larger than 1; or
simultaneous L1 measurement on a same symbol for N cells when receive timing difference is larger than CP length, where N is an integer larger than 1.

7. The method according to claim 1, wherein the second information indicates at least one of the following:
a maximum number of cells for measurement;
a maximum number of frequency layers for measurement;
a maximum number of cells in report;
a maximum number of beams in report;
a maximum value of a product of the number of cells in report and the number of beams in report;
the number of cells for measurement;
the number of frequency layers for measurement;
the number of cells in report;
the number of beams in report.

8. The method according to claim 1, wherein the second information indicates at least one of the following:
L1-reference signal received power (RSRP);
synchronization signal block (SSB) index;
channel state information reference Signal (CSI-RS) index; or
cell identity.

9. The method according to claim 1 or 4, wherein the method further comprises:
receiving fourth information transmitted by the network, wherein the fourth information indicates at least one of the following:
a correspondence between SSB index and cell identity; or
a correspondence between CSI-RS index and cell identity.

10. The method according to claim 1, wherein the method further comprises at least one of the following:
not receiving physical downlink control channel (PDCCH) and/or physical downlink shared channel (PDSCH) and/or CSI-RS for tracking and/or CSI-RS for channel quality indicator (CQI), on SSBs configured for L1-RSRP measurement;
not transmitting physical uplink shared Channel (PUSCH) and/or physical uplink control channel (PUCCH) and/or sounding reference signal (SRS), on SSBs configured for L1-RSRP measurement;
not receiving PDCCH and/or PDSCH and/or CSI-RS for tracking and/or CSI-RS for CQI, on one symbol before the SSB configured for L1-RSRP measurement;
not transmitting PUSCH and/or PUCCH and/or SRS, on one symbol before the SSB configured for L1-RSRP measurement;
not receiving PDCCH and/or PDSCH and/or CSI-RS for tracking and/or CSI-RS for CQI, on one symbol after an SSB configured for L1-RSRP measurement; or
not transmitting PUSCH and/or PUCCH and/or SRS, on one symbol after the SSB configured for L1-RSRP measurement.

11. The method according to claim 1, wherein the method further comprises:
transmitting fifth information to the network, wherein the fifth information is used to indicate at least one of the following:
support for using L3 measurement results in L1 reporting; or
not support for using L3 measurement results in L1 reporting.

12. The method according to any one of claims 1, 4, and 11, wherein the method further comprises:
receiving sixth information transmitted by the network, wherein the sixth information is used to indicate that a measurement target is used for L1 measurement.

13. The method according to claim 12, wherein the method further comprises:
prioritizing measurement of the measurement target for L1 measurement.

14. A measurement method, performed by a network device, comprising:
receiving first information and/or second information transmitted by a user equipment (UE); wherein the first information is related to a receive timing difference; and the second information is related to report and/or measurement.

15. The method according to claim 14, wherein the method further comprises:
transmitting third information to the UE, wherein the third information includes at least one of a cell identity, a frequency, or an SSB, for performing L1 measurement.

16. The method according to claim 14 or 15, wherein the method further comprises:
transmitting fourth information to the UE, wherein the fourth information indicates at least one of the following:
a correspondence between SSB index and cell identity; or
a correspondence between CSI-RS index and cell identity.

17. The method according to claim 14 or 15, wherein the method further comprises:
receiving fifth information transmitted by the UE, wherein the fifth information is used to indicate at least one of the following:
support for using L3 measurement results in L1 reporting; or
not support for using L3 measurement results in L1 reporting.

18. The method according to any one of claims 14, 15 and 17, wherein the method further comprises:
transmitting sixth information to the UE, wherein the sixth information is used to indicate that a measurement target is used for L1 measurement.

19. A measurement apparatus, applied to a user equipment (UE), comprising:
a measurement unit used to perform L1 measurement; and/or
a first transmission unit used to transmit first information and/or second information to a network, wherein the first information is related to a receive timing difference, and the second information is related to report and/or measurement.

20. A measurement apparatus, applied to a network device, comprising:
a first receiving unit used to receive first information and/or second information transmitted by a UE, wherein the first information is related to a receive timing difference, and the second information is related to report and/or measurement.

21. A user equipment (UE), comprising: a first processor and a first communication interface;
wherein the first processor is used to perform L1 measurement;
the first communication interface is used to transmit first information and/or second information to a network, wherein the first information is related to a receive timing difference, and the second information is related to report and/or measurement.

22. A network device, comprising: a second processor and a second communication interface;
wherein the second communication interface is used to receive first information and/or second information transmitted by a user equipment (UE), wherein the first information is related to a receive timing difference, and the second information is related to report and/or measurement.

23. A user equipment (UE), comprising: a first processor and a first memory for storing a computer program executable on the first processor; wherein the first processor is used to, when executing the computer program, perform the steps of the method according to any one of claims 1 to 13.

24. A network device, comprising: a second processor and a second memory for storing a computer program executable on the second processor;
wherein the second processor is used to, when executing the computer program, perform the steps of the method according to any one of claims 14 to 18.

25. A storage medium, comprising: a computer program stored thereon, wherein the computer program, when executed by a processor, performs the steps of the method according to any one of claims 1 to 13, or performs the steps of the method according to any one of claims 14 to 18.

26. A computer program product, comprising: a computer program; wherein the computer program, when executed by a processor, performs the steps of the method according to any one of claims 1 to 13, or performs the steps of the method according to any one of claims 14 to 18.
